Europäisches Patentamt

European Patent Office    (11) Publication number:    **0 124 493**

Office européen des brevets    **B1**

(12)    **EUROPEAN PATENT SPECIFICATION**

(45) Date of publication of patent specification: 26.07.89    (51) Int. Cl.⁴: **B 02 C 19/06, B 03 B 7/00**

(21) Application number: 84830118.0

(22) Date of filing: 13.04.84

(54) **Apparatus for the purification of siliceous sand by means of attrition.**

(30) Priority: 03.05.83 IT 4821083

(43) Date of publication of application:
07.11.84 Bulletin 84/45

(45) Publication of the grant of the patent:
26.07.89 Bulletin 89/30

(84) Designated Contracting States:
AT BE DE FR GB NL SE

(56) References cited:
US-A-2 392 019
US-A-3 054 230
US-A-3 701 484

PATENT ABSTRACTS OF JAPAN, vol. 3, no. 97
(M-69), 17th August 1979;, page 108 M 69; &
JP-A-54 72 568 (KUBOTA TEKKO K.K.) 06-11-
1979

GLASS & CERAMICS, vol. 35, nos 9/10,
September/October 1978, pages 583-586,
Plenum Publishing Corp.; V.P. IVANOV:
"Enrichment of quartz sands by mechanical
rubbing"

(73) Proprietor: Italsil S.p.A.
I-85025 Melfi (Potenza) (IT)

(72) Inventor: Foligno, Adalberto
Via Foggia
I-85025 Melfi (Potenza) (IT)
Inventor: Ippati, Filiberto
Via Montefiorino 15
I-00188 Roma (IT)
Inventor: Marti, Mario
Via Ciccarone 196
I-66054 Vasto (Chieti) (IT)

(74) Representative: Bazzichelli, Alfredo et al
c/o Società Italiana Brevetti S.p.A. Piazza Poli 42
I-00187 Roma (IT)

Courier Press, Leamington Spa, England.

## Description

The present invention relates to an apparatus for the purification of sand particularly suitable for manufacture of glass comprising the features of the first part of claim 1 (US—A—3,701,484).

In manufacturing glass, silica ($SO_2$) is the most important material from the quantitative point of view, since it is ordinarily present in a percentage of approximately 98%.

In nature, silica is contaminated with impurities of various kinds, which must be removed to obtain glass of the desired quality.

In particular, sand for the manufacture of glass is classified on the basis of its iron oxide content ($Fe_2O_3$). Normally, the sand has an iron content greater than 1%, while the manufacture of glass in general requires levels no higher than 0.20%.

Thus a series of processes must be adopted to lower the iron content to acceptable values for the various qualities of glass to be produced.

In general, a treatment for the purification of sand consists of the following phases:

1) *washing* to remove the clay fraction and the fraction unusable granulometrically;

2) *attrition* to facilitate removal of the surface impurities and/or the breaking of granules attached to one another, thanks to the rubbing action of the granules of sand with one another;

3) *silting* to eliminate the impurities separated in the attrition phase;

4) *flotation* to further separate the useful material from the impurities;

5) *magnetic separation* in place of or in addition to the flotation.

Phases of leaching and/or drying may also be added, depending on the requirements.

The aim of the present invention is to provide an apparatus which allow reduction of the phases necessary for the purification treatment, realizing a degree of impurity removal similar to that achieved with a longer and more complex treatment.

In particular the apparatus which is the object of the present invention relates to the 2nd phase described above, and described with the term attrition.

In the prior art the attrition phase comprises placing the sand mass in aqueous suspension (from here on, called the "slurry") in closed cells in which suitable rotors are used to create opposing fluid currents, in order to generate reciprocal abrasion between the particles and so allow the mechanical removal of the impurities covering the grains of sand. In this phase, the aggregates of sand particles held together by a cementing element may also be broken up; said cementing element also is an impurity which must be removed.

These attrition cells and their operation are known in themselves in the state of the art, and are readily available commercially.

A known type of attrition apparatus comprises cells in which rotors rotate to produce a vortex motion of the slurry to cause the reciprocal collision of the particles themselves. Normal apparatus provides a certain number of these cells in series.

In attrition cells described above, the total energy with which the mass to be purified is stirred is not used in an optimal manner, since very high flow rates are not possible since they produce cavitation phenomena on the rotors; moreover, the direction of the flows is not easily controlled. Also, there is an intrinsic damping of the motion due to the viscosity of the slurry, and the rotors must be replaced frequently due to their wear and tear.

The apparatus of US—3,701,484 apparently operates batchwise, whereas it is one aim of the invention to provide an apparatus for a continuous operation. Inter alia this problem is solved by an apparatus comprising the features according to claim 1.

The apparatus according to the present invention substantially comprises: a vessel equipped on the top with an opening for the introduction of the slurry containing the impure sand, and a recycling outlet on the bottom for removal of the slurry still containing impure sand and returning it to the cycle, where said vessel also has an overflow opening for outlet of the slurry containing purified sand and impurities already separated from one another; an attrition cell equipped on the top with inlets consisting of two or more opposite nozzles for introduction of the impure slurry, said cell connecting on the bottom with said vessel; a pump whose intake is connected to the outlet of the vessel and whose discharge is connected to the nozzles of the attrition cell; and a chamber adjacent to said overflow of the vessel equipped with an outlet for removal of the slurry containing the purified sand and the impurities, so that the impure sand introduced through the nozzles has the impurities knocked off by effect of the attrition action arising from the reciprocal collision of the entering flows of slurry from said nozzles. The dependent claims set out particular embodiments of the invention.

An apparatus which is a practical realization of the present invention is described below in an exemplicative and non-limiting fashion, with reference to the attached drawings in which:

Figure 1 represents a scheme for the operation of the apparatus according to the invention;

Figure 2 shows a top view of the apparatus;

Figure 3 shows a side view of the pump of the same apparatus; and

Figure 4 shows a front view of the apparatus in figure 2.

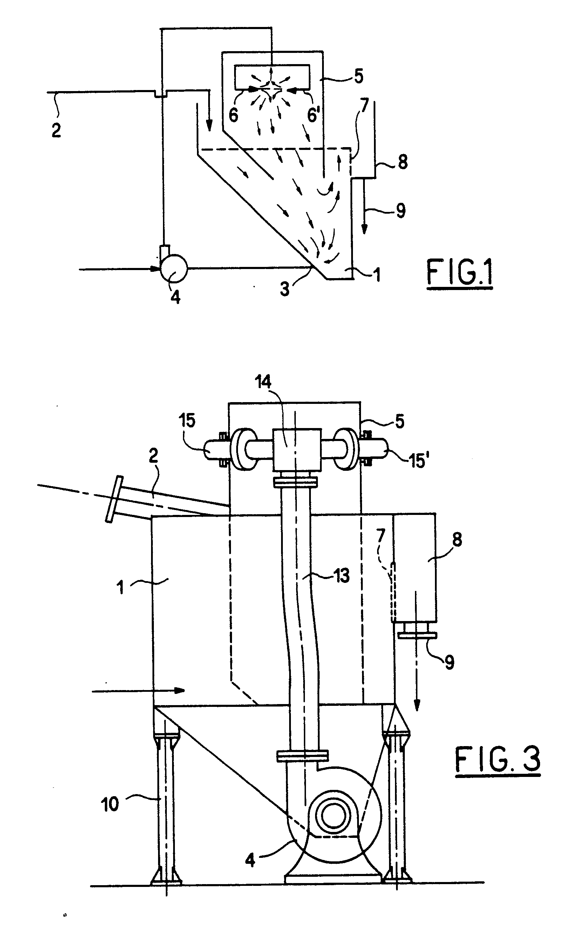

With reference to figure 1, a vessel 1 is filled with the slurry fed through a feeding tube 2. The slurry is drawn through an outlet 3 on the bottom of the vessel and pushed by a pump 4, which gives the flow the necessary energy of motion, into an attrition cell 5 through a pair of nozzles 6,6. From the nozzles 6,6, the flows of slurry are pushed contemporaneously in opposite directions, so causing collision of the sand particles. The flow rate is suitably determined so as to prevent breaking of the sand granules, while at the same time allowing mechanical removal of the impurities which cover the granules themselves, as well as eventual breakage of the sand aggregates.

A flow rate of approximately 10—50 m/second has been found to be suitable.

After this treatment, the slurry falls back into vessel 1, the maximum level of which is held constant thanks to overflow 7.

The particles of greater specific gravity, and hence less purified, tend to fall to the bottom of the vessel 1 and be pushed again by pump 4 toward the attrition nozzles 6,6', while the lighter, and so cleaner, particles tend to go out the overflow opening 7 together with the separated impurities. From overflow 7, this purified slurry passes into a chamber 8 and from here is removed through an outlet 9. Sand and impurities come out of outlet 9 to be sent to a subsequent phase of silting or classification.

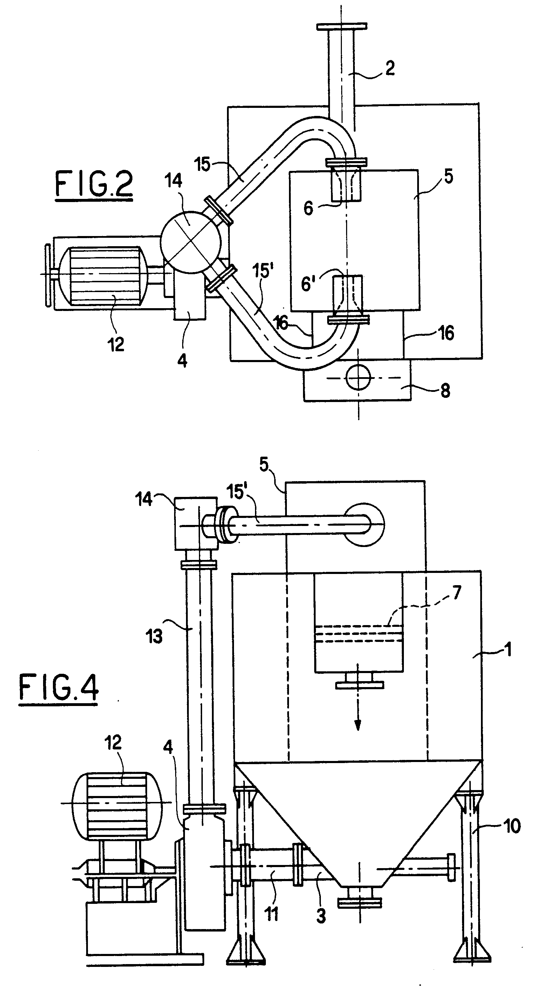

In figures 2, 3 and 4, where elements analogous to those in figure 1 have the same reference numbers, a practical realization of the apparatus according to the invention is illustrated.

The vessel 1 is supported by columns 10, and has a truncated pyramidal bottom to which is connected a tube 11 which connects the outlet 3 from the bottom of the vessel 1 with the pump 4. The pump is powered by a motor 12.

The delivery of pump 4 sends the slurry through a rising tube 13 toward a distributor 14 which distributes the slurry to a certain number of opposite nozzles (only one pair in the realization shown) through distribution tubes 15, 15', which terminate in opposite nozzles 6,6' which spray into the attrition cell 5.

Said cell 5 extends on the inside of vessel 1 open on the bottom, and the level of the slurry in vessel 1 is maintained by an overflow outlet 7. The overflowing liquid falls into a chamber 8 and is removed from outlet 9.

To prevent a flow short circuit between the impure slurry entering through opening 2 and the "purified" slurry coming out the overflow 7, bulkheads 16 may be provided (see figure 2) to prevent mixing of these slurry flows.

It has been found that the method and apparatus according to the invention offer a considerable number of advantages with respect to traditional attrition systems.

In fact, thanks to the better utilization of the motion energy applied to the slurry flow, and also to the possibility of controlling the direction of the flows which collide with one another, impurities are knocked off to a degree ranging from 20% to 50% higher than that achieved in a traditional attrition cell; furthermore, a considerable energy savings of from 20% to 40% is achieved with respect to traditional abrasion systems.

Moreover, the apparatus according to the invention does not require the use of rotors of a particular shape and structure, since the pump is a normal pump for the movement of sandy fluids.

## Claims

1. Apparatus for the purification of silica sands by means of an attrition operation in an attrition cell (5) provided with at least a pair of opposite nozzles (6,6') mounted in the upper part of said attrition cell and a pump (4) whose intake is connected to a first outlet (3) for the slurry and whose delivery is connected to said nozzles of the attrition cell for recycling slurry containing impure sand to said nozzles,

characterized in that it comprises:

said attrition cell (5) having an open bottom;

a vessel (1) provided with said first outlet (3) on the bottom thereof and being in free fluid communication with said attrition cell through said open bottom thereof, said vessel (1) being further provided wih a top inlet (2) for the introduction of slurry containing impure sand and with an overflow outlet (7);

and a chamber (8) adjacent to said overflow outlet (7) for receiving the slurry overflowing from said vessel and containing purified sand and impurities, said chamber (8) having a second outlet (9) for the discharge of said slurry containing purified sand and impurities;

so that the slurry containing impure sand introduced through said inlet (2) and the recycled slurry from said attrition cell are continuously subjected to attrition and purified sand and impurities are extracted from said second outlet (9).

2. Apparatus according to claim 1, in which a slurry distributor (14) is placed between said nozzles and the pump delivery.

3. Apparatus according to claim 1, in which the area of the vessel near said overflow is separated from the rest of the vessel by two vertical bulkheads (16).

4. Apparatus according to claim 1, in which said vessel has a truncated pyramid-shaped bottom converging towards said first outlet (3).

## Patentansprüche

1. Vorrichtung zur Reinigung von Quarzsand durch eine Aneinanderreibebehandlung in einer Zerreibungskammer (5), die mit mindestens zwei, im Oberteil der Zerreibungskammer aufgestellten und entgegengesetzten Düsen (6,6') und einer Pumpe versehen ist, deren Einlauf mit einem ersten Austritt (3) für den Schlamm verbunden ist und deren Ablauf mit den genannten Düsen der Zerreibungskammer verbunden ist, um den Rüchlauf des unreinen Sand enthaltenden Schlammes zu ermöglichen, dadurch gekennzeichnet dass:

die Zerreibungskammer (5) eine offene Unterseite aufweist;

ein Gefäss (1) an seiner Unterseite mit dem obengenannten ersten Austritt (3) versehen ist und durch seine offene Unterseite in freier Flussverbindung mit der Zerreibungskammer ist, wobei das Gefäss (1) mit einem oberen Eintritt (2) zur Einleitung von unreinen Sand enthaltenden Schlamm, und einem Überlaufaustritt (7) versehen ist;

und eine Kammer (8) anliegend an genanntem Überlaufsaustritt (7) ist, um aus dem Gefäss überlaufenden, gereinigten Sand und Unreinheiten enthaltenden Schlamm aufzunehmen, wobei die Kammer (8) einen zweiten Austritt (9) aufweist, der dazu dient den reinen Sand und Unreinheiten enthaltenden Schlamm zu entladen, so dass der unreinen Sand enthaltende und durch den Eintritt (2) eingeleitete Schlamm, und der aus der Zerreibungskammer zurücklaufende Schlamm, einer kontinuierlichen Aneinanderreibung unterworfen werden, wobei reiner Sand und Unreinheiten aus dem zweiten Austritt (9) gewonnen werden.

2. Vorrichtung gemäss Anspruch 1, wobei ein Schlammverteiler (14) zwischen den Düsen und dem Pumpenablauf eingesetzt ist.

3. Vorrichtung gemäss Anspruch 1, wobei das Gebiet des Gefässes nahe am Überlaufsaustritt durch zwei senkrechte Mittelwände vom übrigen Gefäss getrennt ist.

4. Vorrichtung gemäss Anspruch 1, wobei das Gefäss einen stumpfen, pyramidenförmigen, mit dem ersten Austritt (3) konvergierenden Unterteil aufweist.

**Revendications**

1. Dispositif pour la purification de sable siliceux au moyen, d'une opération d'attrition dans une cellule d'attrition (5) pourvue d'au moins deux tuyères opposées (6,6') montées dans la partie supérieure de la cellule d'attrition et d'une pompe (4) dont l'entrée est connectée à une première sortie (3) pour la boue et dont le refoulement est connecté aux tuyères de la cellule d'attrition pour recycler aux tuyères la boue contenant du sable impur, caractérisé en ce qu'il comprend:

ladite cellule d'attrition (5) ayant un fond ouvert;

un récipient (1) pourvu de ladite première sortie (3) sur son fond et librement communicant avec la cellule d'attrition à travers son fond ouvert, ledit récipient (1) étant en outre pourvu d'une entrée supérieure pour l'introduction de boue contenant du sable impur et d'une sortie à déversage (7); et

une chambre (8) adjacente à ladite sortie (7) à déversage pour la réception de la boue qui se déverse du récipient et qui contient du sable purifié et des impuretés, la chambre (8) ayant une seconde entrée (9) pour le déchargement de la boue contenant du sable purifié et des impuretés, de sorte que la boue contenant du sable impuire introduite à travers ladite entrée (2) et la boue recyclée de la cellule d'attrition sont soumises continuellement à de l'attrition et du sable purifié et des impuretés sont extraits de la seconde sortie (9).

2. Dispositif selon la revendication 1, où un distributeur de boue (14) est placé entre les tuyères et le refoulement de la pompe.

3. Dispositif selon la revendication 2, où la zone du récipient proche audit déversage est séparée du reste du récipient par deux cloisons verticales (16).

4. Dispositif selon la revendication 1, où ledit récipient a un fond de forme tronco-pyramidale qui converge vers ladite première sortie (3).

FIG.1

FIG. 3

FIG.2

FIG.4